# EUROPEAN PATENT SPECIFICATION

(11) **EP 3 427 274 B1**
(45) Date of publication and mention of the grant of the patent: **25.12.2019**
(21) Application number: 17712606.7
(22) Date of filing: 07.03.2017
(51) Int. Cl.: H01F 7/16, H01F 7/08, H01F 7/129, H01F 7/126, F16K 31/06, F16K 27/02

(54) **ELECTROMAGNETIC ACTUATOR HAVING A UNITARY POLE PIECE**
ELEKTROMAGNETISCHER AKTUATOR MIT EINHEITLICHEM POLSTÜCK
ACTIONNEUR ÉLECTROMAGNÉTIQUE AVEC PIÈCE POLAIRE UNITAIRE

(30) Priority: 07.03.2016 US 201662304607 P; 08.09.2016 US 201662385042 P
(43) Date of publication of application: 16.01.2019
(73) Proprietor: HUSCO Automotive Holdings LLC, Waukesha, WI 53188-0257 (US)
(72) Inventor: PELLMANN, Matt, Summit, WI 53066 (US); HEIDEMANN, Brian, Lake Mills, WI 53551 (US)
(74) Representative: Wynne-Jones IP Limited
(86) International application number: PCT/US2017/021218
(87) International publication number: WO 2017/156041

(56) References cited:
- EP-A2- 3 070 721
- DE-A1-102013 211 816
- DE-B3-102014 013 602
- US-A1- 2003 075 702
- US-A1- 2014 361 206

## Description

### CROSS-REFERENCES TO RELATED APPLICATIONS

The present application is based on and claims priority to United States Provisional Patent Application No. 62/304,607, filed on March 7, 2016, and entitled "Systems and Methods for An Electromagnetic Actuator Having a Unitary Pole Piece," and United States Provisional Patent Application No. 62/385,042, filed on September 8, 2016, and entitled "Systems and Methods for An Electromagnetic Actuator Having a Unitary Pole Piece."

### STATEMENT REGARDING FEDERALLY SPONSORED RESEARCH

Not Applicable.

### BACKGROUND

The present invention relates generally to electromagnetic actuators and, more specifically to an electromagnetic actuator having a unitary pole piece.

Electromagnetic actuators (e.g., a variable force solenoid) typically include a wire coil positioned within a housing and around a moveable armature. A current can be applied to the wire coil to produce a magnetic field which can then actuate (i.e., move) the moveable armature with respect to the housing. Typically, a pole piece is arranged within the housing to direct the magnetic field generated by the wire coil and influence an output force provided by actuation of the moveable armature. Current pole piece designs may not ensure that the armature cavity, or recess, is effectively (e.g., to prevent fluid leakage pathways) sealed. In addition, the design of current pole pieces can result in flux leakage around the armature. Some of these designs are susceptible to forces applied to the pole piece during assembly and/or installation, which can alter the performance of the electromagnetic actuator.

US 2003/0075702 A1, DE 10 2013 211 816 A1 and DE 10 2014 013 602 B3 disclose an electromagnetic actuator comprising a housing, a unitary pole piece arranged within the housing and including a first end, a side wall defining a choke portion and a mounting flange extending from a distal end of the side wall opposite to the first end, an end cap arranged around the unitary pole piece adjacent to the first end, an armature slidably received within the armature recess of the unitary pole piece, and a wire coil arranged within the housing and positioned around the armature.

### SUMMARY OF THE INVENTION

The aforementioned deficiencies can be overcome by providing an electromagnetic actuator having a unitary pole piece arranged within and coupled to a housing. The housing can be coupled to the unitary pole piece such that a load on the unitary pole piece can be reduced during assembly and/or installation of the electromagnetic actuator. The unitary pole piece can be structured to reduce leakage past an armature slidably received within the pole piece.

According to the present invention there is provided an electromagnetic actuator as defined in present claim 1.

Preferred embodiments are defined in the dependent claims.

The foregoing and other aspects and advantages of the invention will appear from the following description. In the description, reference is made to the accompanying drawings which form a part hereof, and in which there is shown by way of illustration a preferred embodiment of the invention. Such embodiment does not necessarily represent the full scope of the invention, however, and reference is made therefore to the claims defining the scope of the invention

### DESCRIPTION OF DRAWINGS

The invention will be better understood and preferred features, aspects and advantages other than those set forth above will become apparent when consideration is given to the following detailed description thereof. Such detailed description makes reference to the following drawings
FIG. 1 is a perspective view of an electromagnetic actuator according to one embodiment of the present invention.
FIG. 2 is a side view of the electromagnetic actuator of FIG. 1.
FIG. 3 is a cross-sectional view of the electromagnetic actuator of FIG. 1 taken along line 3-3.
FIG. 4 is a cross-sectional view of the electromagnetic actuator of FIG. 1 taken along line 4-4.
FIG. 5 is a schematic illustration of the electromagnetic actuator of FIG. 1 integrated into a control valve according to one embodiment of the present invention.
FIG. 6 is a schematic illustration of an electromagnetic actuator with a housing crimped to both an end cap and a pole piece according to yet another embodiment of the present invention.
FIG. 7 is a schematic illustration of an electromagnetic actuator with a housing press-fit to a pole piece and crimped to an end cap according to still another embodiment of the present invention.
FIG. 8 is a schematic illustration of an electromagnetic actuator with a housing crimped to a flange on a pole piece and press-fit to an end cap according to one embodiment of the present invention.

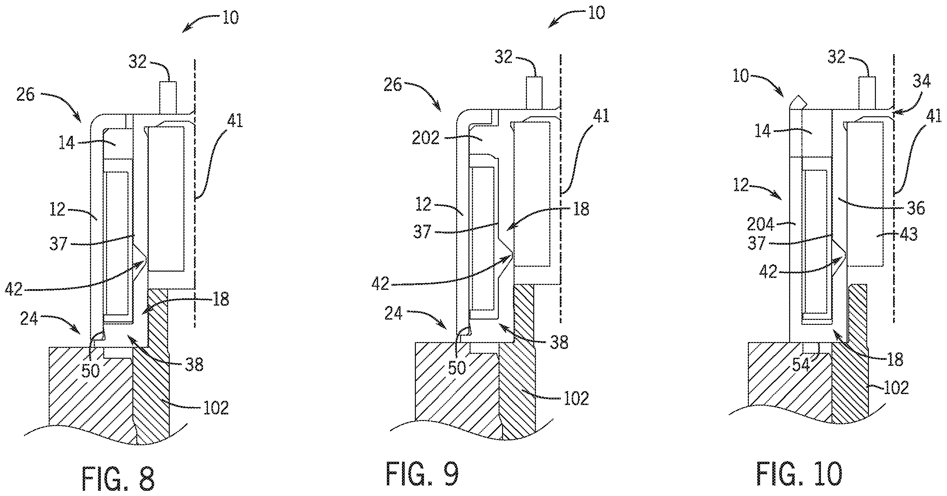

FIG. 8 is a schematic illustration of an electromagnetic actuator with a housing crimped to a flange on a pole piece and molded over an end cap according to another embodiment of the present invention.
FIG. 9, which does not form part of the claimed invention is a schematic illustration of an electromagnetic actuator with a housing crimped to a flange on a pole piece and molded over a bobbin.
FIG. 10 is a schematic illustration of an electromagnetic actuator with a housing and a unitary pole piece formed integrally according to yet another embodiment of the present invention.

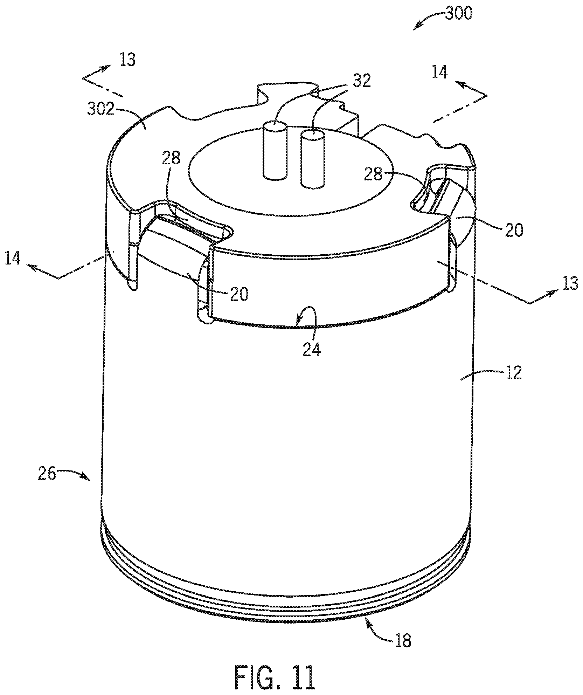

FIG. 11 is a perspective view of an electromagnetic actuator according to another embodiment of the present invention.

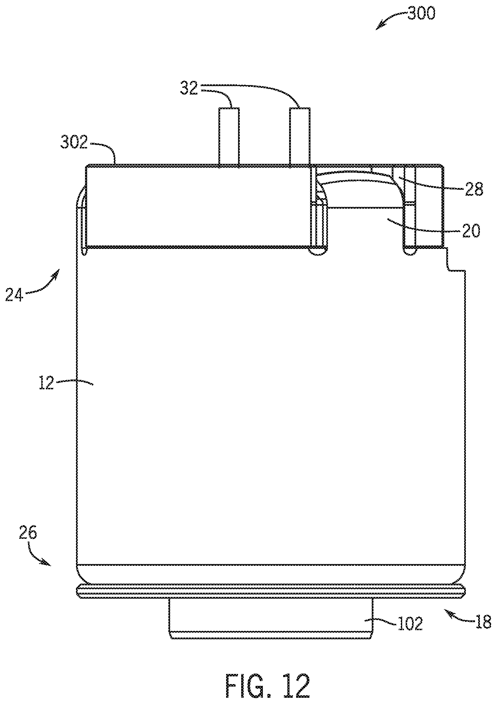

FIG. 12 is a side view of the electromagnetic actuator of FIG. 11.

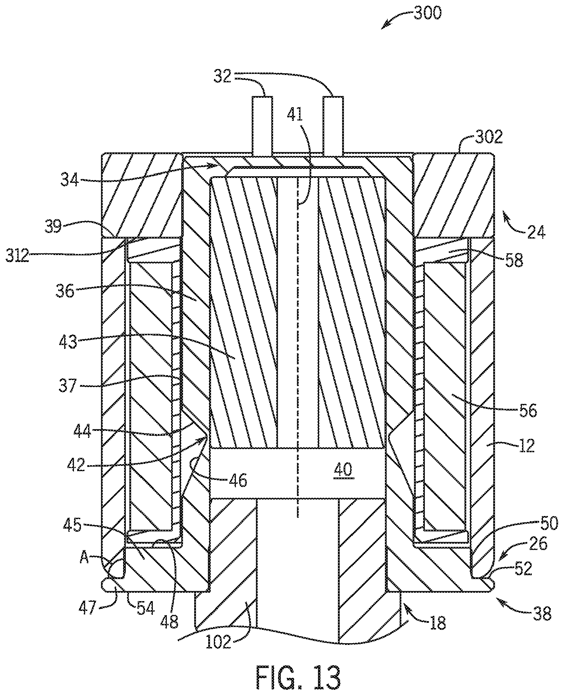

FIG. 13 is a cross-sectional view of the electromagnetic actuator of FIG. 11 taken along line 13-13.

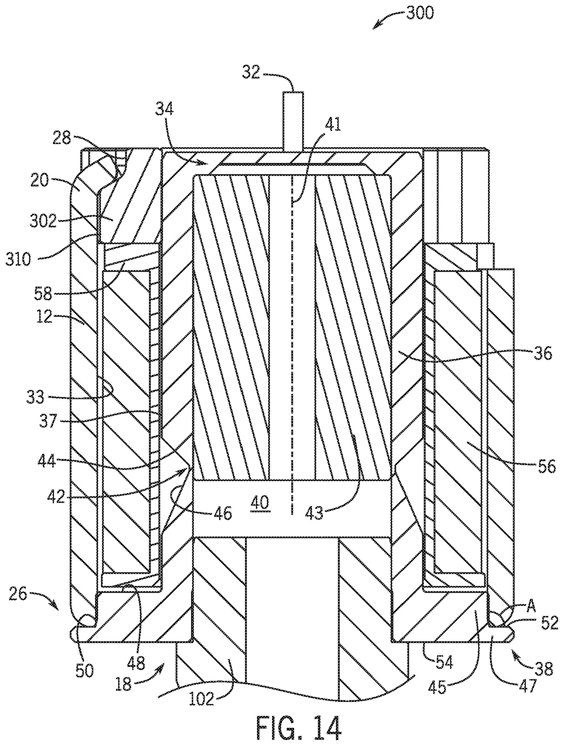

Fig. 14 is a cross-sectional view of the electromagnetic actuator of Fig. 11 taken along line 14-14.

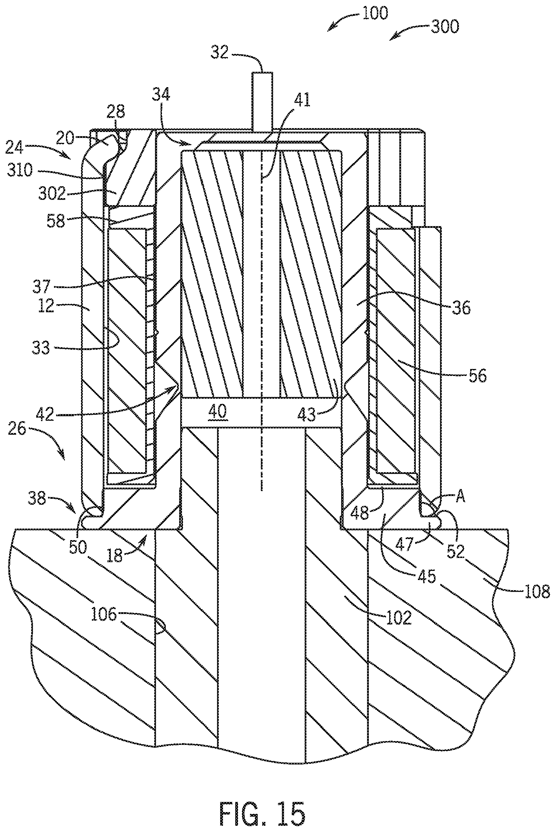

Fig. 15 is a schematic illustration of the electromagnetic actuator of Fig. 11 integrated into a control valve according to one embodiment of the present invention.

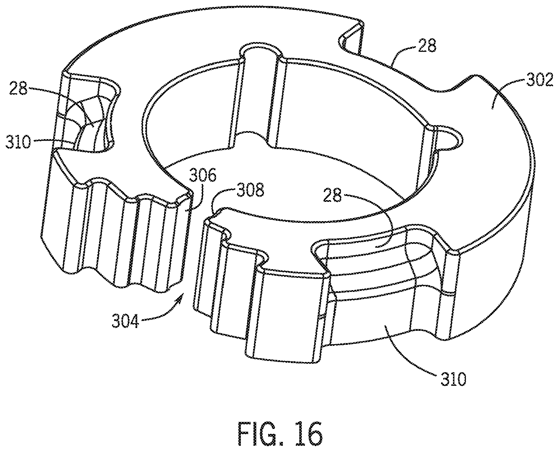

Fig. 16 is a perspective view of an end cap of the electromagnetic actuator of Fig. 11.

### DETAILED DESCRIPTION OF THE INVENTION

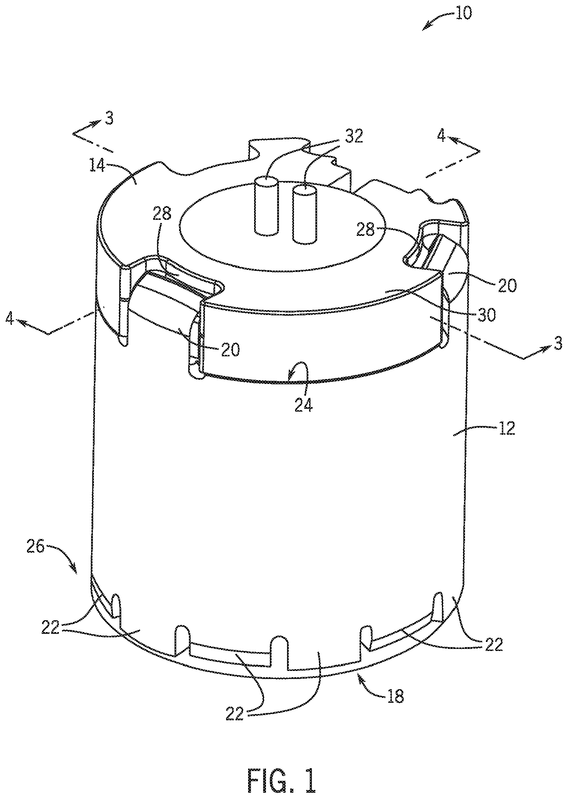

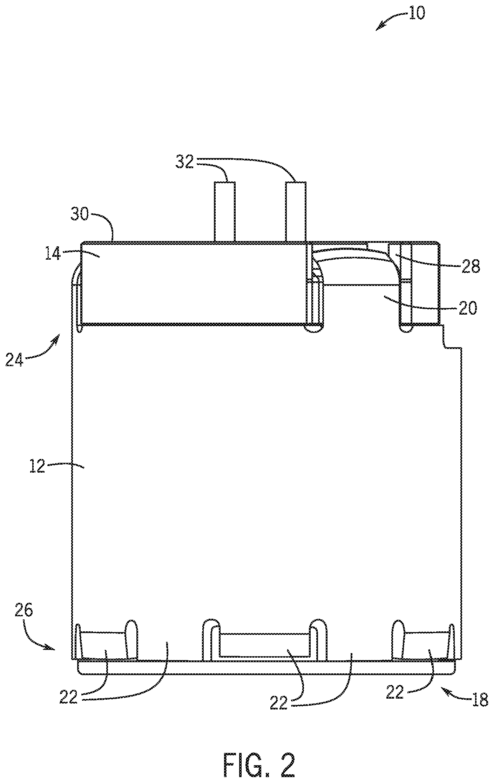

Figs. 1 and 2 show an electromagnetic actuator 10 according to one embodiment of the present invention. The electromagnetic actuator 10 includes a housing 12, an end cap 14, and a unitary pole piece 18. The housing 12 can define a generally cylindrical shape and can be fabricated from a magnetic material (e.g., magnetic steel, iron, nickel, etc.). In other non-limiting examples, the housing 12 may define another shape, as desired. The housing 12 can include a plurality of end cap protrusions 20 and a plurality of pole piece protrusions 22.

The plurality of end cap protrusions 20 can protrude from a first side 24 of the housing 12 adjacent to the end cap 14. The plurality of end cap protrusions 20 can be arranged circumferentially around the first side 24 of the housing 12. The illustrated housing 12 can include three end cap protrusions 20 circumferentially arranged in approximately 120° increments around the first side 24 of the housing 12. In other embodiments, the housing 12 can include more or less than three end cap protrusions 20 arranged circumferentially in any increments around the first side 24 of the housing 12. When the electromagnetic actuator 10 is assembled, as shown in Figs. 1 and 2, the plurality of end cap protrusions 20 can be crimped, or bent, to engage the end cap 14 thereby securing the first side 24 of the housing 12 to the end cap 14.

The plurality of pole piece protrusions 22 can protrude from a second side 26 of the housing 12 opposite to the first side 24. The plurality of pole piece protrusions 22 can be arranged circumferentially around the second side 26 of the housing 12. The illustrated housing 12 can include twelve pole piece protrusions 22 circumferentially arranged in approximately 30° increments around the second side 26 of the housing 12. In other embodiments, the housing 12 can include more or less than twelve pole piece protrusions 22 arranged circumferentially in any increments around the second side 26 of the housing 12. When the electromagnetic actuator 10 is assembled, as shown in Figs. 1 and 2, the plurality of pole piece protrusions 22 can be crimped, or bent, to engage the unitary pole piece 18 in an alternating fashion. That is, alternating pairs of the plurality of pole piece protrusions 22 can be crimped, or bent, to engage the unitary pole piece 18 such that between each alternating pair of crimped pole piece protrusions there is a pole piece protrusion that is not crimped, or bent. In this way, the pole piece protrusions 22 can secure the second side 26 of the housing 12 to the unitary pole piece 18. In other embodiments, the more or less of the plurality of pole piece protrusions 22 can be crimped to the unitary pole piece 18 when the electromagnetic actuator 10 is assembled. It should be appreciated that, for example, a staking process (i.e., punching portions of the housing 12 into the unitary pole piece 18) may alternatively be applied to couple the housing 12 to the unitary pole piece 18.

The end cap 14 can be fabricated from a magnetic material (e.g., powdered metal, magnetic steel, iron, nickel, etc.). The end cap 14 can include a plurality of cap recesses 28 arranged circumferentially around a periphery of the end cap 14. The plurality of cap recesses 28 correspond with the plurality of end cap protrusions 20 such that each one of the plurality of end cap protrusions 20 are configured to crimped into a corresponding one of the plurality of cap recesses 28. The plurality of cap recesses 28 can be dimensioned to arrange the distal ends of the plurality of end cap protrusions 20 substantially flush with a top surface 30 of the end cap 14, when assembled.

A connector (not shown) can be mounted adjacent to the top surface 30 of the end cap 14. The connector (not shown) can be fabricated from a non-magnetic material (e.g., plastic) and can include a pair of electrical contacts 32. The electrical contacts 32 can be fabricated from an electrically conductive material (e.g., aluminum, copper, etc.). In operation, the electrical contacts 32 can be in electrical communication with a controller (not shown) configured to control the operation of the electromagnetic actuator 10. It should be appreciated that the number and arrangement of the electrical contacts 32 is not meant to be limiting in any way and can vary based on the application of the electromagnetic actuator 10.

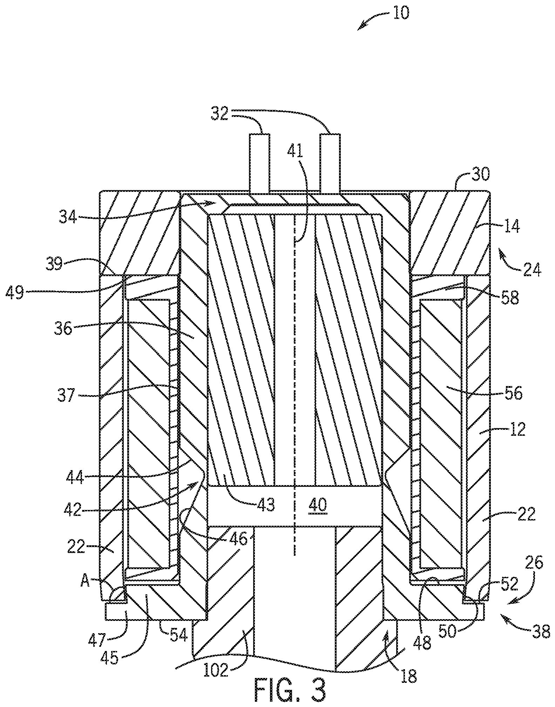

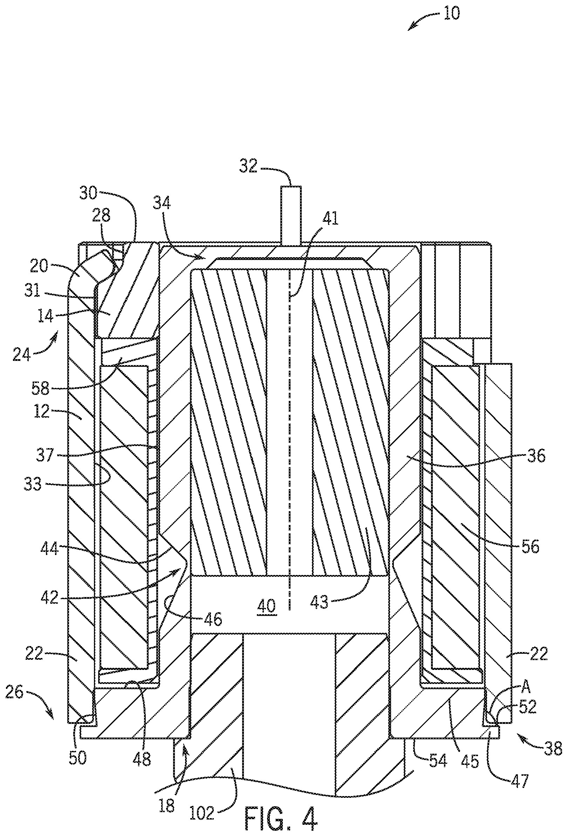

Turning to Figs. 3 and 4, the unitary pole piece 18 is fabricated from a magnetic material (e.g., magnetic steel, iron, nickel, etc.) and includes a first end 34, a side wall 36, a mounting flange 38, and an armature recess 40. The first end 34 is arranged adjacent to the end cap 14, when assembled.

The side wall 36 of the unitary pole piece 18 can extend substantially perpendicularly from the first end 34. The side wall 36 defines define a choke portion 42. The choke portion 42 may define a radial recess, or reduction in radial thickness, of the side wall 36. The choke portion 42 is dimensioned to ensure that magnetic saturation occurs in the choke portion 42 during operation of the electromagnetic actuator 10. That is, a radial cross-sectional area defined by the choke portion 42 ideally would be zero to ensure that magnetic saturation occurs within the choke portion 42, but structural requirements dictate that the choke portion 42 define a measureable cross-sectional area. As will be described herein, the structure and properties of the electromagnetic actuator 10 eliminate or significantly reduce a load applied to the choke portion 42 both during manufacture and operation, which enables the choke portion 42 to define a significantly reduced radial cross-sectional thickness.

The illustrated side wall 36 includes a first tapered surface 44 and a second tapered surface 46 with the choke portion 42 arranged therebetween. The first tapered surface 42 and the second tapered surface 44 can both taper toward the choke portion 42 thereby forming a generally V or U-shaped radial recess in the side wall 36. It should be appreciated that the shape of the structure that forms the choke portion 42 is not meant to be limiting in any way. That is, in other embodiments, the choke portion 42 may be formed via one or more curved surfaces, an arcuate surface, and/or a notch, to name a few.

The unitary pole piece 18 includes the armature recess 40, which is defined by an interior cavity formed by the first end 34 and the side wall 36. The armature recess 40 slidably receives an armature 43 therein. The armature recess 40 may completely enclose or seal the armature 43 therein. That is, the armature recess 40 may be sealed behind the armature 43 and in front of the armature 43 by a continuous surface defined by the unitary pole piece 18. Specifically, the first end 34, the side wall 36, and the mounting surface 54 define a continuous surface that extends along the armature recess 40. In application, the electromagnetic actuator 10 may be mounted to a structure such that a seal is formed between the mounting surface 54 and the structure. Thus, when installed, the continuous surface defined along the mounting surface 54, the side wall 36, and the first end 34 can completely seal the entire armature recess 40 and the armature 43 slidably arranged therein. The armature 43 is fabricated from a magnetic material (e.g., magnetic steel, iron, nickel, etc.). The armature 43 can include a central aperture extending longitudinally through the armature 43. In the illustrated non-limiting example, the housing 12, the end cap 14, the unitary pole piece 18, and the armature 43 may define a common central axis 41.

The mounting flange 38 extends radially outward from a distal end of the side wall 36 opposite to the first end 34. The mounting flange 38 can define a substantially stepped profile including a first flanged portion 45 and a second flanged portion 47 that can define a larger diameter than the first flanged portion 45. The first flanged portion 45 can include a bobbin surface 48 extending substantially perpendicularly from the side wall 36 and an angled surface 50 extending from a distal end of the bobbin surface 48 toward the second flanged portion 47. Specifically, the angled surface 50 can extend toward a housing surface 52 of the second flanged portion 47 such that an angle A between the angled surface 50 and the housing surface 52 can be between approximately 70° and 90°. In other embodiments, the angle A can be between approximately 75° and 85°. When assembled, the alternating pairs of the plurality of pole piece protrusions 22 can be crimped, or bent, to engage the angled surface 50 thereby securing the housing 12 to the unitary pole piece 18. Also, the alternating pairs of the plurality of pole piece protrusions 22 that are not crimped, or bent, can engage the housing surface 52.

The mounting flange 38 can include a mounting surface 54 configured to engage a structure that the electromagnetic actuator 10 can be coupled to in application. The mounting surface 54 can extend substantially perpendicularly from the distal end of the side wall 36 toward the second flanged portion 47. That is, the mounting surface 54 may extend radially outward from a distal end of the side wall 36. The mounting surface 54 can be spaced from the bobbin surface 48 to define a thickness of the mounting flange 38.

With continued reference to Figs. 3 and 4, the electromagnetic actuator 10 includes a wire coil 56 arranged within the housing 12. The wire coil 56 can be wrapped around a bobbin 58 dimensioned to position the wire coil 56 within the housing 12 such that, when assembled, the wire coil 56 extends around the armature 43. The wire coil 56 can be fabricated, for example, from a copper coil that can be configured to produce a magnetic field, and thereby apply a force to the armature 43, in response to a current being applied to the wire coil 56. The magnitude of the magnetic field, and the force, produced by the wire coil 56 can be determined by the magnitude of the current applied to the wire coil 56. As described above, the electromagnetic actuator 10 may be in electrical communication with a controller (not shown) via the electrical contacts 32. In some embodiments, the controller (not shown) can be configured to selectively apply a current to the wire coil 56 at a desired magnitude.

The bobbin 58 can be fabricated from a non-magnetic material (e.g., plastic). In some embodiments, the bobbin 58 can be integrally formed with the connector (not shown). That is, the connector (not shown) and the bobbin 58 can be formed using a single part.

Since the armature 43 is slidably received within the armature recess 40 defined by the unitary pole piece 18, the armature 43 is selectively moveable axially within the armature recess 40 between one or more positions in response to the force produced by the magnetic field of the wire coil 56.

In operation, the electromagnetic actuator 10 may be utilized, for example, as a variable force solenoid, and/or the electromagnetic actuator 10 may be integrated into a control valve arrangement. In either case, the electromagnetic actuator 10 may be coupled to an application structure 102. In some non-limiting examples, the application structure 102 may be in the form of a secondary pole piece 102. In some non-limiting examples, the application structure 102 may be a valve body 102.

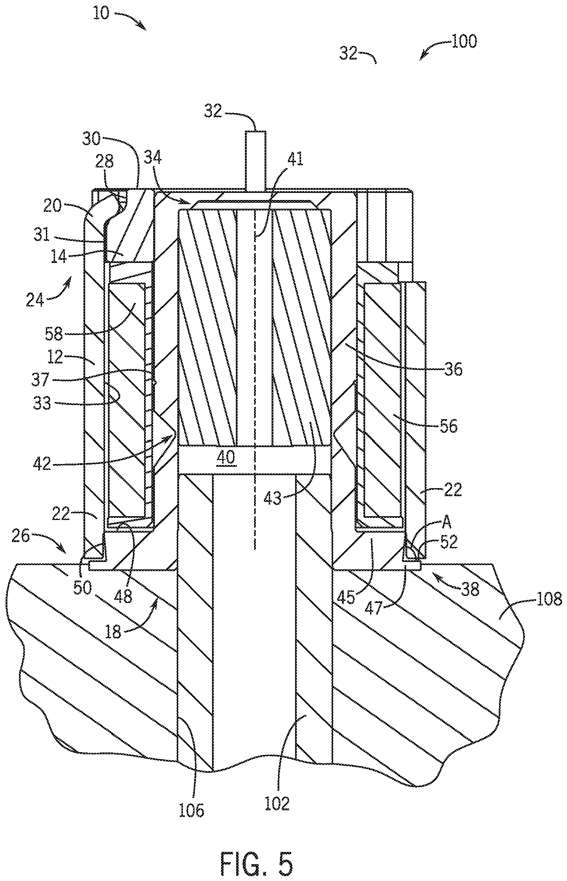

One non-limiting application where the electromagnetic actuator 10 can be integrated into a control valve will be described with reference to Figs. 1-5. As shown in Fig. 5, the electromagnetic actuator 10 can be integrated into a control valve 100. The control valve 100 can include a valve body 102 secured at least partially within the armature recess 40 defined by the unitary pole piece 18. The design of the electromagnetic actuator 10 enables the valve body 102 to only engage the armature recess 40 of the unitary pole piece 18 thereby simplifying the assembly of the control valve 100.

As is known in the art, the valve body 102 can include a valve element (not shown) slidably received with the valve body 102. The valve element (not shown) can be coupled to the armature 43 via a coupling element (not shown) such that the valve element (not shown) is moveable in response to axial actuation of the armature 43.

During installation, the valve body 102 can be inserted within a bore 106 defined by, for example, a mounting structure 108. In one embodiment, the mounting structure 108 may be in the form of an application structure 108. The valve body 102 can be inserted into the valve bore 106 until the mounting surface 54 of the mounting flange 38 engages the application structure 108. That is, the mounting surface 54 of the mounting flange 38 can act as a stop for the control valve 100 and define a depth that the valve body 102 is inserted into the bore 106. With the control valve body 102 inserted into the bore 106, in some embodiments, a retention device (not shown) (e.g., a clamp) can be installed to secure the control valve 100 onto the application structure 108. The retention device (not shown) can engage the end cap 14 to apply an installation force that axially forces the electromagnetic actuator 10 down onto the application structure 108. In the illustrated embodiment, the installation force may force the mounting surface 54 into engagement with the application structure 108, thereby providing a seal therebetween.

Once the control valve 100 is secured onto the application structure 108 by the retention device (not shown), the electromagnetic actuator 10 design can control a load applied to the choke portion 42 of the unitary pole piece 18. In particular, the retention device (not shown) can induce an axial installation force on the end cap 14 in a direction toward the application structure 108. The installation force may be transferred from the end cap 14 axially through the housing 12 to the mounting flange 38. Thus, an installation load, or force, acting on the electromagnetic actuator 10 can be distributed from the end cap 14 through the housing 12 and to the mounting flange 38 of the unitary pole piece 18 thereby bypassing the choke portion 42 of the unitary pole piece 18. This can enable the choke portion 42 to define a smaller cross-sectional area to aid in the magnetic performance of the electromagnetic actuator 10.

The design of the electromagnetic actuator 10 may further control a load applied to the choke portion 42 via the interaction between the housing 12 and the end cap 14. Prior to crimping, an interface between the end cap 14 and the housing 12 may be governed by an axial contact. That is, an axial surface 39 of the end cap 14 may be configured to interact with an axial surface 49 of the housing 12 during assembly of the electromagnetic actuator 10. The interaction between the axial surface 39 of the end cap 14 and the axial surface 49 of the housing 12 can occur on an axial plane (i.e., a plane that is perpendicular to the central axis 41). The axial engagement between the housing 12 and the end cap 14 allows for radial misalignment between the housing 12, the end cap 14, and the unitary pole piece 18, which eliminates bending moments that may have been applied to the choke portion 42 during manufacture. In addition, a radial gap can be arranged between an outer surface 31 of the end cap 14 and an inner surface 33 of the housing 12 adj acent to the plurality of end cap protrusions 20. This radial gap may further allow radial misalignment between the housing 12, the end cap 14, and the unitary pole piece 18 during assembly of the electromagnetic actuator 10.

Further, an interaction between the end cap 14 and the unitary pole piece 18 may eliminate or significantly reduce any loading applied to the choke portion 42 during manufacture of the electromagnetic actuator 10. In some embodiments, for example, a clearance fit may exist between an inner surface 35 of the end cap 14 and an outer surface 37 of the side wall 36. In these non-limiting examples, there would be no loading applied to the choke portion 42 during manufacture. In other embodiments, for example, the end cap 14 may be press-fit onto the outer surface 37 of the side wall 36. The press-fit arrangement may reduce an air gap between the end cap 14 and the unitary pole piece 18 thereby increasing an output force provided by the electromagnetic actuator 10 and reducing variation in the output force arising due to manufacturing variabilities. The press-fit engagement between the end cap 14 and the unitary pole piece 18 may minimally load the choke portion 42 during manufacture.

Thus, as described above, the design and properties of the electromagnetic actuator 10 control, and significantly reduce, any loading applied to the choke portion 42 of the unitary pole piece 18 during manufacture and/or in application.

In operation, the control valve body 102 can be in fluid communication with a process fluid (e.g., oil) and the valve element (not shown) within the valve body 102 can be actuated in response to axial movement of the armature 43. In some embodiments, the actuation of the valve element (not shown) can selectively provide and/or inhibit fluid communication between one or more ports (not shown) of the application structure 108. In some embodiments, the process fluid can be communicated into the armature recess 40. In these embodiments, the process fluid can act to provide dampening during actuation of the armature 43. As described above, the design of the unitary pole piece 18 (i.e., the continuous surface defined by the first end 34, the side wall 36, and the mounting surface 54) can completely seal the armature recess 40 and the armature 43 slidably received therein. This can aid in preventing leakage of the process fluid during actuation of the armature 43, which could result in reduced damping control. Specifically, during actuation of the armature 43, process fluid can travel through the armature 43 via the central aperture. Process fluid trapped behind the armature 43 (i.e., adjacent to the first end 34) can be forced toward the valve body 102 during movement of the armature 43, due to the enclosure of the armature 43 within the armature recess 40. In this way, the unitary pole piece 18 reduces leakage passageways and maintains damping control provided by the electromagnetic actuator 10.

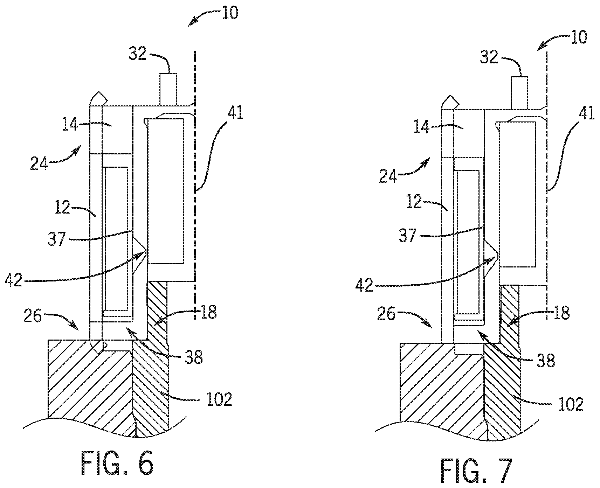

Figs. 6-11 show additional non-limiting configurations of the housing 12, the end cap 14, and the unitary pole piece 18. As shown in the non-limiting configuration of Fig. 6, the first side 24 of the housing 12 can be crimped to the top surface 30 of the end cap 14, and the second side 26 of the housing 12 can be press-fit to the mounting flange 38. The illustrated end cap 14 may not include the cap recesses 28 and the illustrated mounting flange 38 may not define a stepped profile.

As shown in the non-limiting configuration of FIG. 8, the first side 24 of the housing 12 can extend around and engage the end cap 14 and the second side 26 of the housing 12 can be crimped to the angle surface 50 of the mounting flange 38. The illustrated housing 12 can be stamped or molded to define the shape of the second side 26. As shown in the non-limiting configuration of FIG. 9, which does not form part of the claimed invention, the first side 24 of the housing 12 can extend around and engage a housing flange 202 extending from the unitary pole piece 18 adjacent to the first end 34. The second side 26 of the housing 12 can be crimped to the angled surface 50 of the mounting flange 38.

As shown in the non-limiting configuration of FIG. 10 the housing 12 and the unitary pole piece 18 may be integrally formed. That is, the housing 12 and the unitary pole piece 18 may be a single component. In this non-limiting configuration, the unitary pole piece 18 can include a housing portion 204 that extends axially toward the end cap 14 from a distal end of the mounting flange 38. The housing portion 204 may extend axially upward to the end cap 14 and may be, for example, crimped to the end cap 14 to retain the end cap 14.

FIGS. 11-15 illustrate an electromagnetic actuator 300 according to another embodiment of the present invention. The electromagnetic actuator 300 is similar to the electromagnetic actuator 10 described above, excepted as described below or is apparent from the figures. Similar components between the electromagnetic actuator 300 and the electromagnetic actuator 10 are labeled with like reference numerals. As show in FIGS. 11-15, the second side 26 of the housing 12 of the electromagnetic actuator 300 may not include the plurality of pole piece protrusions 22 but, instead, define a substantially uninterrupted profile dimensioned to be press-fit to the unitary pole piece 18. In order to facilitate the press-fit between the second side 26 of the housing 12 and the unitary pole piece 18, the angled surface 50 of the unitary pole piece 18 can extend substantially perpendicularly toward the housing surface 52. That is, the angle A defined between the angled surface 50 and the housing surface 52 can be approximately 90°. The press-fit arrangement between the second side 26 of the housing 12 and the unitary pole piece 18 can improve magnetic contact between the housing 12 and the unitary pole piece 18, thereby reducing potential air gaps therebetween. As is known in the art, air gaps in a magnetic flux path can result in reduced magnetic efficiency. Thus, the improved magnetic contact between the housing 12 and the unitary pole piece 18 can result in improved magnetic efficiency and therefore improved force output. Further, the improved magnetic contact between the housing 12 and the unitary pole piece 18 can reduce the variation in force output by the electromagnetic actuator 300 due to improved manufacturability.

With specific reference to Fig. 16, the electromagnetic actuator 300 includes an end cap 302 that defines a split shape. That is, the end cap 302 can define a generally round shape with a split, or gap, 304 arranged therein. In other words, the end cap 302 includes a first end 306 and a second end 308 where the first end 306 is spaced from the second end 308 such that the gap 304 is arranged therebetween. Similar to the end cap 14, described above, the end cap 302 can be fabricated from a magnetic material (e.g., magnetic steel, iron, nickel, etc.), and can include the plurality of cap recesses 28 arranged circumferentially around a periphery thereof. The plurality of cap recesses 28 can be dimensioned such that a corresponding one of the plurality of end cap protrusions 20 of the housing 12 can be crimped thereon.

The split design of the end cap 302 enables enable the end cap 302 to be press-fit around the unitary pole piece 18. Specifically, the end cap 302 can be press-fit around the outer surface 37 of the side wall 36 of the unitary pole piece 18 adjacent to the first end 34. The press-fit configuration can improve magnetic contact between the end cap 302 and the unitary pole piece 18, thereby reducing potential air gaps therebetween. As is known in the art, air gaps in a magnetic flux path can result in reduced magnetic efficiency. Thus, the improved magnetic contact between the end cap 302 and the unitary pole piece 18 can result in improved magnetic efficiency and therefore improved force output. Further, the improved magnetic contact between the end cap 302 and the unitary pole piece 18 can reduce the variation in force output by the electromagnetic actuator 300 due to improved manufacturability.

In addition to the magnetic improvements provided by the press-fit between the end cap 302 and the unitary pole piece 18, the split design of the end cap 302 can also reduce an assembly force required to couple the end cap 302 around the unitary pole piece 18. This reduced press-fit assembly force can further minimize a load on the choke portion 42 of the unitary pole piece 18 during assembly and operation, which can enable the choke portion 42 to define a smaller radial cross-sectional area to aid in the magnetic performance of the unitary pole piece 18.

The press-fit of the housing 12 onto the unitary pole piece 18 can also control the load applied to the choke portion 42 during assembly. That is, the retention device (not shown) can induce an axial installation force on the end cap 302 in a direction toward the application structure 108. The installation force may be transferred from the end cap 14 axially through the housing 12 to the mounting flange 38. Thus, an installation load, or force, acting on the electromagnetic actuator 300 can be distributed from the end cap 14 through the housing 12 and to the mounting flange 38 of the unitary pole piece 18 thereby bypassing the choke portion 42 of the unitary pole piece 18. This can enable the choke portion 42 to define a smaller cross-sectional area to aid in the magnetic performance of the electromagnetic actuator 10.

Further, the design of the electromagnetic actuator 10 may further control a load applied to the choke portion 42 via the interaction between the housing 12 and the end cap 302. Prior to crimping, an interface between the end cap 302 and the housing 12 may be governed by an axial contact. That is, an axial surface 312 of the end cap 302 may be configured to interact with the axial surface 49 of the housing 12 during assembly of the electromagnetic actuator 10. The interaction between the axial surface 312 of the end cap 302 and the axial surface 49 of the housing 12 can occur on an axial plane (i.e., a plane that is perpendicular to the central axis 41). The axial engagement between the housing 12 and the end cap 302 allows for radial misalignment between the housing 12, the end cap 14, and the unitary pole piece 18, which eliminates bending moments that may have been applied to the choke portion 42 during manufacture. In addition, a radial gap can be arranged between an outer surface 310 of the end cap 302 and the inner surface 33 of the housing 12 adjacent to the plurality of end cap protrusions 20. This radial gap may further allow radial misalignment between the housing 12, the end cap 14, and the unitary pole piece 18 during assembly of the electromagnetic actuator 10.

As is known in the art, in some configurations, an electromagnetic actuator may include a pole piece and a c-pole, which are separated axially such that a gap exists therebetween. The use of the pole piece and c-pole as separate components may lead to misalignment between these components during manufacture or operation. Any misalignment between the pole piece and c-pole can lead to armature side loading and thereby to armature wear, or tipping, and increased hysteresis. As described above, the present disclosure provides an electromagnetic actuator 10,300 having a unitary pole piece 18. The use of a unitary pole piece 18 eliminates any potential misalignment between a pole piece and a c-pole as they are fabricated from a single component. Thus, the systems and methods for an electromagnetic actuator having a unitary pole piece described herein may eliminate or reduce armature wear, or tipping, and increased hysteresis due to pole piece/c-pole misalignment. Further, the design and properties of the electromagnetic actuators 10 and 300 described herein control, or significantly reduce, any potential load applied to the choke portion 42 of the unitary pole piece 18 during manufacture and/or in application. This enables the choke portion 42 to define minimal radial cross-sectional thickness thereby improving the magnetic performance of the electromagnetic actuators 10 and 300.

Within this specification embodiments have been described in a way which enables a clear and concise specification to be written, but it is intended and will be appreciated that embodiments may modified within the scope of the present invention.

Thus, while the invention has been described in connection with particular embodiments and examples, the invention is not necessarily so limited, but only by the scope defined by the appended claims.

## Claims

1. An electromagnetic actuator (10; 300) comprising:
a housing (12);
a unitary pole piece (18) at least partially arranged within the housing, the unitary pole piece including a first end (34), a side wall (36) defining a choke portion (42), and a mounting flange (38) having a mounting surface (54), the mounting flange extending from a distal end of the side wall opposite to the first end (34), wall, wherein the first end and the side wall define an armature recess (40);
an end cap (14, 302) arranged around the unitary pole piece adjacent to the first end, wherein the end cap defines a split design and thereby includes a first end (306) and a second end (308) spaced from the first end such that a gap (304) is arranged therebetween;
an armature (43) slidably received with the armature recess of the unitary pole piece; and
a wire coil (56) arranged within the housing and positioned around the armature.

2. The electromagnetic actuator of claim 1, wherein the mounting flange defines a stepped profile.

3. The electromagnetic actuator of claim 2, wherein the mounting flange includes a first flanged portion (45) and a second flanged portion (47) defining a larger diameter than the first flanged portion, and wherein the first flanged portion includes an angled surface that extends toward a housing surface of the second flanged portion, the housing surface facing the housing, such that an angle (A) between 70 degrees and 90 degrees exists between the angled surface and the housing surface, and wherein one side of the housing is crimped to the angled surface.

4. The electromagnetic actuator of claim 3, wherein the housing surface is configured to at least partially engage the housing.

5. The electromagnetic actuator of claim 1, wherein one side of the housing is press-fit to the mounting flange of the unitary pole piece.

6. The electromagnetic actuator of claim 5, wherein the mounting flange defines a stepped profile.

7. The electromagnetic actuator of claim 1, wherein the end cap is press-fit around the side wall of the unitary pole piece adjacent to the first end of the unitary pole piece.

8. The electromagnetic actuator of claim 1, wherein the choke portion defines a reduced radial thickness compared to the side wall.

9. The electromagnetic actuator of claim 1, wherein the housing and the unitary pole piece are integrally formed, and wherein the housing defines a housing portion of the unitary pole piece that extends axially from a distal end of the mounting flange toward the end cap.

10. The electromagnetic actuator of claim 1, wherein the armature recess is formed by a cavity defined by the first end and the side wall of the unitary pole piece, and wherein the first end, the side wall, and the mounting surface define a continuous surface to seal the armature within the armature recess.

11. The electromagnetic actuator of claim 1, wherein an engagement between the mounting surface and an application structure (102), which is mountable to the mounting surface of the mounting flange, is configured to provide a seal therebetween.

12. The electromagnetic actuator of claim 1, wherein the arrangement of the end cap, the housing and the mounting flange results in that an installation force applied to the end cap bypasses the choke portion of the unitary pole piece.

13. The electromagnetic actuator of claim 1, wherein an interface between the end cap and the housing is arranged in an axial plane.

## Patentansprüche

1. Elektromagnetisches Stellglied (10; 300), das Folgendes umfasst:
ein Gehäuse (12);
ein einheitliches Polstück (18), das wenigstens teilweise in dem Gehäuse angeordnet ist, wobei das einheitliche Polstück ein erstes Ende (34), eine einen Drosselabschnitt (42) definierende Seitenwand (36) und einen Montageflansch (38) mit einer Montagefläche (54) beinhaltet, wobei sich der Montageflansch von einem distalen Ende der Seitenwand gegenüber dem ersten Ende (34) erstreckt, wobei das erste Ende und die Seitenwand eine Ankeraussparung (40) definieren;
eine Endkappe (14, 302), die um das einheitliche Polstück neben dem ersten Ende angeordnet ist, wobei die Endkappe ein geteiltes Design definiert und dadurch ein erstes Ende (306) und ein zweites Ende (308) aufweist, das vom ersten Ende beabstandet ist, so dass eine Lücke (304) dazwischen entsteht;
einen Anker (43), der mit der Ankeraussparung des einheitlichen Polstücks verschiebbar aufgenommen ist; und
eine Drahtspule (56), die in dem Gehäuse angeordnet und um den Anker herum positioniert ist.

2. Elektromagnetisches Stellglied nach Anspruch 1, wobei der Montageflansch ein gestuftes Profil definiert.

3. Elektromagnetisches Stellglied nach Anspruch 2, wobei der Montageflansch einen ersten Flanschabschnitt (45) und einen zweiten Flanschabschnitt (47) aufweist, der einen größeren Durchmesser definiert als der erste Flanschabschnitt, und wobei der erste Flanschabschnitt eine abgewinkelte Fläche aufweist, die sich in Richtung einer Gehäusefläche des zweiten Flanschabschnitts erstreckt, wobei die Gehäusefläche dem Gehäuse zugewandt ist, so dass ein Winkel (A) zwischen 70 Grad und 90 Grad zwischen der abgewinkelten Fläche und der Gehäusefläche existiert, und wobei eine Seite des Gehäuses auf die abgewinkelte Fläche gecrimpt ist.

4. Elektromagnetisches Stellglied nach Anspruch 3, wobei die Gehäusefläche so konfiguriert ist, dass sie wenigstens teilweise in das Gehäuse eingreift.

5. Elektromagnetisches Stellglied nach Anspruch 1, wobei eine Seite des Gehäuses auf den Montageflansch des einheitlichen Polstücks aufgepresst wird.

6. Elektromagnetisches Stellglied nach Anspruch 5, wobei der Montageflansch ein gestuftes Profil definiert.

7. Elektromagnetisches Stellglied nach Anspruch 1, wobei die Endkappe um die Seitenwand des einheitlichen Polstücks neben dem ersten Ende des einheitlichen Polstücks aufgepresst wird.

8. Elektromagnetisches Stellglied nach Anspruch 1, wobei der Drosselabschnitt eine reduzierte radiale Dicke im Vergleich zur Seitenwand definiert.

9. Elektromagnetisches Stellglied nach Anspruch 1, wobei das Gehäuse und das einheitliche Polstück einstückig ausgebildet sind und wobei das Gehäuse einen Gehäuseabschnitt des einheitlichen Polstücks definiert, der sich axial von einem distalen Ende des Montageflanschs zur Endkappe erstreckt.

10. Elektromagnetisches Stellglied nach Anspruch 1, wobei die Ankeraussparung durch einen Hohlraum gebildet wird, der vom ersten Ende und der Seitenwand des einheitlichen Polstücks definiert wird, und wobei das erste Ende, die Seitenwand und die Montagefläche eine kontinuierliche Fläche zum Abdichten des Ankers in der Ankeraussparung definiert.

11. Elektromagnetisches Stellglied nach Anspruch 1, wobei ein Eingriff zwischen der Montagefläche und einer Anwendungsstruktur (102), die an der Montagefläche des Montageflanschs montiert werden kann, zum Bereitstellen einer Dichtung dazwischen konfiguriert ist.

12. Elektromagnetisches Stellglied nach Anspruch 1, wobei die Anordnung der Endkappe, des Gehäuses und des Montageflanschs dazu führt, dass eine auf die Endkappe aufgebrachte Installationskraft den Drosselabschnitt des einheitlichen Polstücks umgeht.

13. Elektromagnetisches Stellglied nach Anspruch 1, wobei eine Grenzfläche zwischen der Endkappe und dem Gehäuse in einer axialen Ebene angeordnet ist.

## Revendications

1. Actionneur électromagnétique, (10 ; 300) comprenant :
un boîtier (12) ;
une pièce polaire unitaire (18) au moins partiellement agencée au sein du boîtier, la pièce polaire unitaire incluant une première extrémité (34), une paroi latérale (36) définissant une partie de bobine d'arrêt (42), et une bride de montage (38) ayant une surface de montage (54), la bride de montage s'étendant d'une extrémité distale de la paroi latérale à l'opposé de la première extrémité (34), dans lequel la première extrémité et la paroi latérale définissent un évidemment d'armature (40) ;
un bouchon d'extrémité (14,302) agencé autour de la pièce polaire unitaire adjacent à la première extrémité, dans lequel le bouchon d'extrémité définit un motif fendu et inclut ainsi une première extrémité (306) et une deuxième extrémité (308) espacée de la première extrémité de sorte qu'un écartement (304) est agencé entre celles-ci ;
une armature (43), reçue de manière coulissante par l'évidemment d'armature de la pièce polaire unitaire ; et
une bobine de fil (56) agencée au sein du boîtier et positionnée atour de l'armature.

2. Actionneur électromagnétique selon la revendication 1, dans lequel la bride de montage définit un profil étagé.

3. Actionneur électromagnétique selon la revendication 2, dans lequel la bride de montage inclut une première partie à bride (45) et une deuxième partie à bride (47) définissant un plus grand diamètre que la première partie à bride, et dans lequel la première partie à bride inclut une surface inclinée qui s'étend vers une surface de boîtier de la deuxième partie à bride, la surface de boîtier faisant face au boîtier, de sorte qu'un angle (A) compris entre 70 degrés et 90 degrés existe entre la surface inclinée et la surface de boîtier, et dans lequel un côté du boîtier est serti sur la surface inclinée.

4. Actionneur électromagnétique selon la revendication 3, dans lequel la surface de boîtier est configurée pour entrer en prise au moins partiellement avec le boîtier.

5. Actionneur électromagnétique selon la revendication 1, dans lequel un côté du boîtier est ajusté par pression sur la bride de montage de la pièce polaire unitaire.

6. Actionneur électromagnétique selon la revendication 5, dans lequel la bride de montage définit un profil étagé.

7. Actionneur électromagnétique selon la revendication 1, dans lequel le bouchon d'extrémité est ajusté par pression autour de la paroi latérale de la pièce polaire unitaire adjacent à la première extrémité de la pièce polaire unitaire.

8. Actionneur électromagnétique selon la revendication 1, dans lequel la partie de bobine d'arrêt définit une épaisseur radiale réduite par rapport à la paroi latérale.

9. Actionneur électromagnétique selon la revendication 1, dans lequel le boîtier et la pièce polaire unitaire sont formés d'un seul tenant, et dans lequel le boîtier définit une partie de boîtier de la pièce polaire unitaire qui s'étend de manière axiale d'une extrémité distale de la bride de montage vers le bouchon d'extrémité.

10. Actionneur électromagnétique selon la revendication 1, dans lequel l'évidemment d'armature est formé par une cavité définie par la première extrémité et la paroi latérale de la pièce polaire unitaire, et dans lequel la première extrémité, la paroi latérale, et la surface de montage définissent une surface continue pour sceller l'armature au sein de l'évidemment d'armature.

11. Actionneur électromagnétique selon la revendication 1, dans lequel une entrée en prise entre la surface de montage et une structure d'application (102), qui peut être montée sur la surface de montage de la bride de montage, est configurée pour fournir un scellement entre celles-ci.

12. Actionneur électromagnétique selon la revendication 1, dans lequel l'agencement du bouchon d'extrémité, du boîtier et de la bride de montage a pour résultat le fait qu'une force d'installation appliquée au bouchon d'extrémité contourne la partie de bobine d'arrêt de la pièce polaire unitaire.

13. Actionneur électromagnétique selon la revendication 1, dans lequel une interface entre le bouchon d'extrémité et le boîtier est agencée dans un plan axial.
